# EUROPÄISCHE PATENTSCHRIFT

(11) **EP 4 442 431 B1**
(45) Veröffentlichungstag und Bekanntmachung des Hinweises auf die Patenterteilung: **24.12.2025**
(21) Anmeldenummer: 24163145.6
(22) Anmeldetag: 13.03.2024
(51) Int. Cl.: B29C 51/18, B23Q 11/08, B65B 9/04, B65B 57/00, B65B 59/04, F16P 1/02, F16P 3/02, F16P 3/08, B29L 31/00

(54) **ABDECKSYSTEM, VERWENDUNG SOWIE VERFAHREN**
COVERING SYSTEM, USE AND METHOD
SYSTÈME DE RECOUVREMENT, UTILISATION ET PROCÉDÉ

(30) Priorität: 04.04.2023 DE 102023108600
(43) Veröffentlichungstag der Anmeldung: 09.10.2024
(73) Patentinhaber: MULTIVAC Sepp Haggenmüller SE & Co. KG, 87787 Wolfertschwenden (DE)
(72) Erfinder: Mummenhoff, Andreas, 87463 Dietmannsried (DE)
(74) Vertreter: Grünecker Patent- und Rechtsanwälte PartG mbB

(56) Entgegenhaltungen:
- EP-B1- 1 052 174
- EP-B1- 1 871 568
- EP-B1- 2 749 499
- WO-A1-2012/041293
- DE-A1- 102017 106 898
- DE-A1- 102019 214 962
- DE-B4- 102012 015 303

## Beschreibung

Die vorliegende Erfindung bezieht sich auf eine Verpackungsmaschine gemäß Anspruch 1. Des Weiteren bezieht sich die Erfindung auf ein Verfahren gemäß Anspruch 8.

Aus der DE 10 2017 106 898 A1 sind stapelbare, robuste Schutzabdeckungen bekannt, die sich als Turm auf einem Maschinengestell einer Tiefziehverpackungsmaschine aufeinanderstapeln lassen, damit sie nicht auf dem Hallenboden neben der Tiefziehverpackungsmaschine für Reinigungszwecke beziehungsweise Serviceintervalle abgestellt werden müssen. Diese Schutzabdeckungen weisen einen robusten, in sich stabilen kastenförmigen Aufbau auf, um sicher einen Turm auf dem Maschinengestell der Tiefziehverpackungsmaschine ausbilden zu können. Im eigentlichen Produktionsbetrieb der Tiefziehverpackungsmaschine können die stapelbaren Schutzabdeckungen in Produktionsrichtung hintereinander, insbesondere am Ein- und Ausgang einer Schneidstation der Tiefziehverpackungsmaschine, als Eingriffsschutz oberhalb einer darunter in Produktionsrichtung transportierten Folienbahn positioniert sein.

Nachteilig beim Einsatz der vorangehend beschriebenen, stapelbaren Schutzabdeckungen ist, dass sich während des Betriebs ein unter diesen Schutzabdeckungen in der Folienbahn entstehender Folienbahnstau schwer, vor allen Dingen nicht zeitnah zum Zeitpunkt seiner Entstehung, genau erfassen lässt. Deshalb kann es sein, dass durch einen nicht rechtzeitig detektierten Folienbahnstau ein langer Abschnitt an Ausschussmaterial entsteht, was zu höheren Herstellungskosten führt. Außerdem lässt sich eine unerwünschte Handhabung der Schutzabdeckung durch einen Bediener im laufenden Betrieb, beispielsweise ein Aufkippen der Schutzabdeckung, in manchen Fällen nicht zuverlässig bzw. nur zeitverzögert erfassen.

DE 10 2019 214962A1, EP 1 052 174 B1 und EP 2 749 499 B1 offenbaren jeweils Verpackungsmaschinen, die als Schalenverschließmaschine oder Tiefziehverpackungsmaschine konfiguriert sind, mit Schutzabdeckungen als Eingriffsschutz oberhalb eines entlang der Verpackungsmaschinen gebildeten Transportbereichs für Verpackungsmaterial.

DE 10 2012 015303 B4, WO 2012/041293 A1 sowie EP 1 871 568 B1 offenbaren Lamellenschutzabdeckungen für Führungsbahnen von Werkzeugmaschinen.

Aufgabe der Erfindung ist es, die vorangehend in Zusammenhang mit dem Stand der Technik bestehenden Nachteile zu beheben.

Diese Aufgabe wird gelöst anhand einer Verpackungsmaschine gemäß Anspruch 1 sowie mittels eines Verfahrens zum Detektieren eines Folienbahnstaus gemäß Anspruch 8.

Vorteilhafte Weiterbildungen der Erfindung sind durch die jeweiligen Gegenstände der Unteransprüche gegeben.

Die Erfindung betrifft ein Abdecksystem zur Anbringung an einer Verpackungsmaschine, beispielsweise zur Anbringung an einer Tiefziehverpackungsmaschine oder an einer Schalenverschließmaschine. Das erfindungsgemäße Abdecksystem umfasst mindestens eine Schutzabdeckung, die als Eingriffsschutz zumindest bereichsweise oberhalb eines entlang der Verpackungsmaschine gebildeteten Transportbereichs von Verpackungsmaterial positionierbar ist.

An einer in Form einer Tiefziehverpackungsmaschine ausgebildeten Verpackungsmaschine könnte die Schutzabdeckung beispielsweise zumindest bereichsweise oberhalb einer entlang der Tiefziehverpackungsmaschine in Produktionsrichtung transportierbaren Folienbahn positionierbar sein. An einer in Form einer Schalenverschließmaschine ausgebildeten Verpackungsmaschine könnte die Schutzabdeckung beispielsweise zumindest bereichsweise oberhalb von entlang der Schalenverschließmaschine in Produktionsrichtung transportierbaren, unversiegelten oder versiegelten Schalenteilen positionierbar sein.

Die Erfindung sieht vor, dass ein Abstand zwischen in Längserstreckung der Schutzabdeckung gegenüberliegenden, äußeren Rändern der Schutzabdeckung verringerbar ist. Eine solche Abstandsverringerung, sprich Verformbarkeit der Schutzabdeckung, kann dazu genutzt werden, um eine dafür ursächliche, unerwünschte Bedingung reaktionsschnell zu detektieren, beispielsweise um einen unerwünschten Bedienereingriff an der Schutzabdeckung und/oder einen unkontrollierten Transport des Verpackungsmaterials zu erfassen. Damit kann die erfindungsgemäße Schutzabdeckung neben ihrer eigentlichen Funktion, als Eingriffsschutz zu dienen, auch noch als ein in Abhängigkeit der Abstandsverringerung, darauf reaktionsschnell ansprechendes Detektionsmittel bzw. als darauf reaktionsschnell ansprechender Teil einer Erfassungseinrichtung zum Erfassen einer die Abstandsreduzierung veranlassenden, unerwünschten Bedingung zum Einsatz kommen, beispielsweise zum Erfassen eines unter der Schutzabdeckung zustande kommenden Folienbahnstaus und/oder zum Erfassen einer unerwünschten Handhabe der Schutzabdeckung durch einen Bediener, wie beispielsweise ein Aufkippen oder Anheben der Schutzabdeckung im laufenden Betrieb der Verpackungsmaschine, wodurch sich ggf. eine Eingriffsmöglichkeit in einen Gefahrenbereich ergibt.

Die erfindungsgemäße Schutzabdeckung kann die unerwünschte Bedingung, beispielsweise einen Folienbahnstau und/oder ein Anheben der Schutzabdeckung, dadurch erfassen, dass sie dadurch veranlasst, ohne Zeitverzögerung, d.h. in Echtzeit, ihre Geometrie verändert, nämlich deren äußere Ränder ihren Abstand zueinander reduzieren. Diese durch die unerwünschte Bedingung verursachte, simultan an der Schutzabdeckung messbare Geometrieveränderung lässt sich zuverlässig und reaktionsschnell erfassen, sodass auf die dafür ursächliche, unerwünschte Bedingung vorteilhaft, insbesondere schneller reagiert werden kann.

Bei der Erfindung kann die Schutzabdeckung vor allen Dingen zur zeitechten Erfassung eines unerwünschten Eingriffs und/oder zum Erfassen eines Folienbahnstaus verwendet werden, da die einander gegenüberliegenden, äußeren Ränder einen reaktionsschnellen Auslösemechanismus zur Verfügung stellen, anhand dessen sich beispielsweise ein unerwünschtes Anheben der Schutzabdeckung und/oder ein Folienbahnstau, wenn er von unten auf die Schutzabdeckung drückt, ohne Verzögerung erfassen lässt.

Vorteilhaft ist auch, dass durch den erfindungsgemäßen Einsatz der Schutzabdeckung als ein sich verformbares Eingriffsschutzmittel zum Erfassen einer unerwünschten Bedingung auf ein gesondertes Mittel für diesen Zweck verzichtet werden kann, sprich insgesamt ein kostengünstiger Aufbau vorliegt.

Gemäß einer Ausführungsform der Erfindung führt eine durch einen Folienbahnstau und/oder durch einen Bediener veranlasste Verformung der Schutzabdeckung dazu, dass sich der Abstand zwischen den in Längserstreckung der Schutzabdeckung beabstandeten, äußeren Rändern der Schutzabdeckung verringert. Dabei lässt sich ein von unten gegen die Schutzabdeckung drückender Folienbahnstau zumindest bereichsweise in der Schutzabdeckung angesichts dessen Verformung abbilden, sodass ein Bediener der Tiefziehverpackungsmaschine unverzüglich auf einen Folienbahnstau aufmerksam wird. Dadurch, dass die Schutzabdeckung derart konfiguriert ist, dass deren durch den Folienbahnstau hervorgerufene Verformung zum Verringern des Abstands der beabstandeten, äußeren Rändern der Schutzabdeckung führt, liegt insgesamt ein zuverlässig auf Wechselwirkung zwischen dem Folienbahnstau und der Schutzabdeckung basierendes, einfach funktionierendes Detektionssystem zum Erfassen des Folienbahnstaus vor, insbesondere ein Detektionssystem, welches im Aufbau in kompakter Weise und kostengünstig herstellbar ist. Auch der Versuch eines Bedieners, die Schutzabdeckung seitlich anzuheben, um einen Einblick in den Transportbereich des Verpackungsmaterials zu bekommen, kann zuverlässig durch eine damit einhergehende Verformung der Schutzabdeckung zum Verhindern eines Sicherheitsrisikos erfasst werden.

Gemäß der Erfindung weist die Schutzabdeckung mindestens eine Scharnierbandkette mit mehreren in Quererstreckung der Schutzabdeckung verlaufenden, parallelen Scharniergelenkachsen auf. Eine solche Scharnierbandkette kann zwischen den in Produktionsrichtung gegenüberliegenden, äußeren Rändern der Schutzabdeckung eine gelenkige Verbindung herstellen, um die Ränder aufeinanderzubewegen zu können, wenn die Scharnierbandkette beispielsweise durch einen Folienbahnstau stellenweise angehoben wird. Die Scharnierbandkette ermöglicht es ferner, dass sich die Schutzabdeckung aufrollen, zusammenlegen und/oder zusammenschieben lässt, wodurch sich die Schutzabdeckung in kompakter Weise beiseiteschaffen lässt, wenn es beispielsweise an der Verpackungsmaschine zu einem Umrüstvorgang kommt, insbesondere an der Tiefziehverpackungsmaschine zu einem Formatwechsel und/oder Folienwechsel kommt. Eine derartig verkleinerte Schutzabdeckung lässt sich gut an einem vorbestimmten Platz auf engem Bauraum verstauen. Im aufgerollten, gefalteten oder zusammengeschobenen Zustand lässt sich die Schutzabdeckung auch leichter transportieren. Die an der Schutzabdeckung integrierte Scharnierbandkette bildet insbesondere ein nach oben leicht nachgebbares Mittel aus, woran bereits geringe, durch einen Folienbahnstau von unten auf die Unterseite der Scharnierbandkette wirkende Kräfte oder ein unerwünschtes Anheben der Scharnierbandkette durch einen Bediener im laufenden Betrieb der Verpackungsmaschine bewirken, dass sich die Scharnierbandkette dadurch nach oben wölbt und sich die in Produktionsrichtung gegenüberliegenden Ränder durch die Aufwölbung der Scharnierbandkette aufeinanderzubewegen.

Vorstellbar wäre es, dass die in Längserstreckung der Schutzabdeckung gegenüberliegenden Ränder aneinander befestigbar sind, beispielsweise mittels eines Magnetverschlusses, um die Schutzabdeckung im z.B. aufgerollten Zustand zu fixieren, damit sie besser handhabbar ist.

Die Scharnierbandkette kann gegen Kräfte von oben eine relativ stabile Form ausbilden. Dafür ist die Scharnierbandkette ohne in Längserstreckung der Schutzabdeckung, d.h. keine in Produktionsrichtung, verlaufende Scharniergelenkachsen auf. Die Scharnierbandkette bildet damit trotz ihres gelenkigen Aufbaus gegen Kräfte von oben einen stabilen Eingriffsschutz aus. Hinzu kommt, dass die Scharnierbandkette einen sehr flachen Aufbau haben kann, wodurch sie besser in unmittelbarer Nähe oberhalb des Verpackungsmaterials, beispielsweise oberhalb der Folienbahn, positionierbar ist und somit reaktionsschnell auf einen sich bildenden Folienbahnstau reagiert.

Die Schutzabdeckung lässt sich insbesondere dann leicht von einem Bediener für einen gewünschten Zweck, beispielsweise um verstraut zu werden, manipulieren, wenn die Scharnierbandkette aus mehreren gelenkig miteinander verbundenen Kunststoffgliedern zusammengebaut ist. Dadurch kann die Schutzabdeckung in Leichtbauweise zur Verfügung gestellt werden, sodass sie auch zuverlässig auf geringe, von unten auf sie wirkende Folienbahnstaukräfte anspricht. Die Kunststoffglieder können vor allen Dingen für einen hygienischen Betrieb aus einem antibakteriellen oder antimikrobiellen Kunststoff hergestellt sein.

Eine vorteilhafte Variante sieht vor, dass an der Schutzabdeckung vorgesehene Leisten die gegenüberliegenden, äußeren Ränder der Schutzabdeckung ausbilden. Solche vorzugsweise quer zur Produktionsrichtung ausgerichteten Leisten können der Schutzabdeckung trotz ihres flexiblen Aufbaus bzw. ihrer Ansprechbarkeit gegen Kräfte von unten zur Erfassung des Folienbahnstaus, in Quererstreckung, wenn auf sie von oben Kräfte wirken, Stabilität verleihen. Außerdem können die Leisten gut als Führungselemente fungieren, da sie sich einfach aufeinanderzubewegen lassen, wenn sich der Abstand zwischen ihnen, beispielsweise durch einen Folienbahnstau veranlasst, verringert. Ferner bilden die Leisten Mittel an der Schutzabdeckung aus, die sich mittels geeigneter Sensorik gut erfassen lassen, um präzise die Abstandsverringerung zwischen den beiden Leisten zu messen.

Gemäß einer Variante der Erfindung weist das Abdecksystem mindestens eine an der Verpackungsmaschine, beispielsweise an einem Maschinenrahmen, befestigbare Halterung mit mindestens einem darin integrierten Sensor zum Erfassen der der Halterung zugeordneten Leiste der Schutzabdeckung auf.

Um die Lage der Leiste mittels des in der Halterung integrierten Sensors präzise erfassen zu können, könnte die Leiste mindestens einen vom Sensor erfassbaren Magneten aufweisen. Der Sensor und die Leiste wirken bei dieser Variante als Magnetschalter zusammen, um eine Abstandsreduzierung zwischen den äußeren Rändern bzw. zwischen den Leisten erfassen zu können. Indem die äußeren Ränder der Schutzabdeckung, beispielsweise bei einem Folienbaustau, aufeinanderzubewegt werden können, sprich sich der dazwischenliegende Abstand verringert, kann der Magnetschalter leicht aktiviert und von ihm ein dementsprechendes Signal an eine mit ihm funktional verbundene Steuereinrichtung der Verpackungsmaschine aussenden, worauf die Steuereinrichtung einen Maschinenstopp veranlasst.

Eine insgesamt zu einer reduzierten Sensorik führende Variante sieht vor, dass das Abdecksystem für die andere Leiste eine Sperre zum Sichern deren Position vorsieht. Diese Leiste bleibt damit selbst dann fixiert, wenn die Schutzabdeckung auf einen Folienbahnstau oder auf einen unerwünschten Bedienereingriff reagiert. Es reicht bei dieser Ausführungsform aus, dass lediglich die vom Sensor der Halterung erfasste Leiste ihren Abstand zur fixierten Leiste verringert, um das Signal zur Detektion des Folienbahnstaus oder das Signal zum Detektieren des unerwünschten Bedienereingriffs zu generieren. In anderen Worten bedeutet dies, dass pro Schutzabdeckung lediglich eine Sensoreinheit ausreichend ist, um eine Abstandsreduzierung zwischen den äußeren Rändern zu detektieren.

Ein in mancherlei Hinsicht vorteilhafter Aufbau des Abdecksystems ergibt sich dadurch, dass das Abdecksystem seitliche Führungsschienen zum Tragen der Schutzabdeckung aufweist. Diese Führungsschienen können an gegenüberliegenden Seiten des Maschinenrahmens entlang der Produktionsrichtung verlaufen. Auf den seitlichen Führungsschienen kann die Schutzabdeckung derart getragen werden, dass sie nicht dazwischen durch ihr Eigengewicht durchhängt. Außerdem lassen sich darauf die Leisten gut aufeinanderzubewegen.

Vorzugsweise bilden die Führungsschienen Bordwände aus, damit die Schutzabdeckung in Reaktion auf einen Folienbahnstau nicht aus der Führung herausfällt. Zwischen den Bordwänden kann die Schutzabdeckung so abgelegt sein, dass sie quer zur Produktionsrichtung fixiert ist, während sie in Produktionsrichtung verformen kann, um einen sich darunter aufbauenden Folienbahnstau anzeigen zu können. Die Höhe der Bordwände kann dabei je nach Maschinentypen unterschiedlich ausgebildet sein.

Insbesondere sind die Führungsschienen in Produktionsrichtung, an gegenüberliegenden Seiten eines Maschinenrahmens der Verpackungsmaschine, insbesondere der Tiefziehverpackungsmaschine, lösbar befestigt. Insbesondere können die Führungsschienen in den Halterungen des Abdecksystems lösbar eingesteckt sein. Damit brauchen am Maschinenrahmen keine weiteren Fixiereinheiten zur Montage des Abdecksystems vorgesehen sein.

Die Erfindung bezieht sich auf eine Verpackungsmaschine, die in Form einer Tiefziehverpackungsmaschine oder einer Schalenverschließmaschine konfiguriert ist, mit mindestens einem erfindungsgemäßen Abdecksystem. Das erfindungsgemäße Abdecksystem kann insbesondere als Abdecksystem zwischen einer Siegelstation und einer in Produktionsrichtung stromabwärts positionierten Schneideinrichtung der Tiefziehverpackungsmaschine eingesetzt werden. Entlang dieser Produktionsstrecke kann das Abdecksystem zuverlässig verhindern, dass ein Bediener in den Arbeitsbereich der Tiefziehverpackungsmaschine greift, insbesondere in einen Bereich der Schneideinrichtung. Ferner kann das Abdecksystem entlang dieser Produktionsstrecke, das heißt zwischen der Siegelstation und der stromabwärts positionierten Schneideinrichtung zuverlässig zur Detektion eines Folienbahnstaus der darunter versiegelten Folienbahn eingesetzt werden. Das Abdecksystem kann allerdings auch an anderer Stelle entlang des Maschinenrahmes der Tiefziehverpackungsmaschine eingesetzt werden, beispielsweise am Eingang und/oder am Ausgang der Siegelstation und/oder am Eingang und/oder am Ausgang der Formstation. An einer Schalenverschließmaschine kann das Abdecksystem insbesondere am Eingang und/oder am Ausgang einer Siegelstation der Schalenverschließmaschine zum Einsatz kommen.

Die Schutzabdeckung kann an der Verpackungsmaschine als Eingriffsschutz oberhalb eines Transportbereichs von Verpackungsmaterial und durch eigene Verformung zum Detektieren einer für die Verformung ursächlichen, unerwünschten Bedingung verwendet werden. Dadurch kann die unerwünschte Bedingung, d.h. eine mit einem Kostenrisiko oder einem Sicherheitsrisiko verbundene Betriebssituation, beispielsweise ein unkontrollierter Transport des Verpackungsmaterials und/oder ein unerwünschtes Manipulieren der Schutzabdeckung durch einen Bediener, reaktionsschnell erfasst werden.

Insbesondere wird die Schutzabdeckung an einer Tiefziehverpackungsmaschine als Eingriffsschutz oberhalb einer mittels Transportketten in Produktionsrichtung der Tiefziehverpackungsmaschine transportierten Folienbahn verwendet. Eine solche Schutzabdeckung kann vor allem durch eigene Verformung zum Detektieren eines für die Verformung ursächlichen Folienbahnstaus verwendet werden. Diese Schutzabdeckung kann damit für verschiedene Einsatzzwecke, nämlich als Eingriffsschutz und als Detektionsmittel zum Erfassen eines Folienbahnstaus, verwendet werden. Alternativ könnte die Schutzabdeckung an einer Schalenverschließmaschine als Eingriffsschutz oberhalb von in Produktionsrichtung der Schalenverschließmaschine transportierten Schalenteilen verwendet werden.

Des Weiteren bezieht sich die Erfindung auf ein Verfahren an einer erfindungsgemäßen Verpackungsmaschine zum Detektieren einer unerwünschten Bedingung entlang eines Transportbereichs von Verpackungsmaterial anhand der oberhalb des Verpackungsmaterials positionierten Schutzabdeckung. Erfindungsgemäß wird die unerwünschte Bedingung dadurch erfasst, dass sich der Abstand zwischen den in Längserstreckung der Schutzabdeckung gegenüberliegenden, äußeren Rändern der Schutzabdeckung, in Reaktion auf eine auf die Schutzabdeckung wirkende Kraft verringert. Diese Kraft kann durch eine unerwünschte Handlung eines Bedieners erzeugt werden, beispielsweise durch den Versuch, die Schutzabdeckung aufzukippen. Ebenso könnte die Kraft eine durch einen Folienbahnstau hervorgerufene Kraft sein, auf welche die Schutzabdeckung durch Verformung anspricht, wodurch deren äußere Ränder aufeinanderzubewegt werden. Die Abstandsreduzierung kann simultan zur Krafteinwirkung auf die Schutzabdeckung geschehen, sodass sich die unerwünschte Bedingung reaktionsschnell erfassen lässt.

Insbesondere kann das Verfahren zum Detektieren eines Folienbahnstaus entlang einer in Produktionsrichtung geführten Folienbahn anhand einer oberhalb der Folienbahn positionierten Schutzabdeckung dienen. Dabei kann der Folienbahnstau dadurch erfasst werden, dass sich ein Abstand zwischen den in Längserstreckung der Schutzabdeckung gegenüberliegenden, äußeren Rändern der Schutzabdeckung in Reaktion auf eine von unten durch den Folienbahnstau gegen die Schutzabdeckung wirkende Kraft verringert. Dadurch ist ein einfach realisierbares Verfahren gegeben, um zuverlässig und vor allem reaktionsschnell einen Folienbahnstau ermitteln zu können. Das Verfahren dieser Ausführungsform verwendet eine als Eingriffsschutz konfigurierte Schutzabdeckung ferner als Detektionsmittel, um einen Folienbahnstau zu erfassen.

Die Erfindung wird anhand der in den Figuren gezeigten Ausführungsbeispiele genauer erläutert. Im Einzelnen zeigen:
- Figur 1: eine Verpackungsmaschine in Form einer Tiefziehverpackungsmaschine in perspektivischer Darstellung,
- Figur 2: eine schematische Darstellung einer Tiefziehverpackungsmaschine mit daran installierter Schutzabdeckung,
- Figur 3: eine schematische Darstellung der in Figur 2 dargestellten Tiefziehverpackungsmaschine mit Schutzabdeckung zum Zeitpunkt eines Folienbahnstaus,
- Figur 4: ein Abdecksystem in isolierter, perspektivischer Darstellung,
- Figur 5: eine Schnittdarstellung des Abdecksystems aus Figur 4 auf einem Maschinenrahmen der Tiefziehverpackungsmaschine,
- Figur 6: ein Detail des Abdecksystems aus Figur 4,
- Figur 7: ein weiteres Detail des Abdecksystems aus Figur 4,
- Figur 8: ein weiteres Detail des Abdecksystems aus Figur 4, und
- Figur 9: eine Verpackungsmaschine in Form einer Schalenverschließmaschine.

Gleiche Komponenten sind in den Figuren durchgängig mit den gleichen Bezugszeichen versehen.

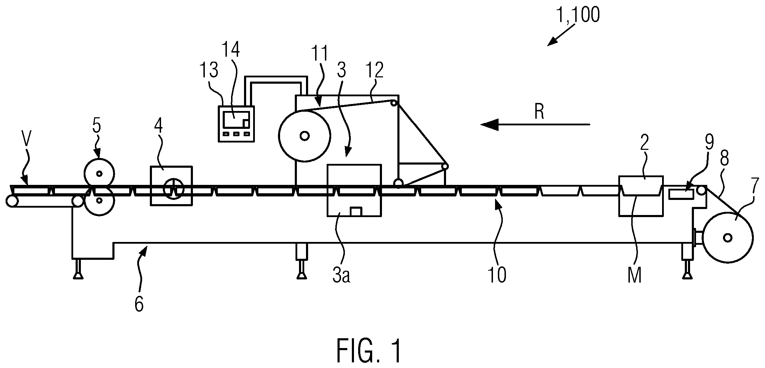

Figur 1 zeigt in einer schematischen Seitenansicht eine Verpackungsmaschine 100, die als intermittierend arbeitende Tiefziehverpackungsmaschine 1 konfiguriert ist. Diese Tiefziehverpackungsmaschine 1 weist eine Formstation 2, eine Siegelstation 3, eine Querschneideeinrichtung 4 und eine Längsschneideeinrichtung 5 auf, die in dieser Reihenfolge in einer Produktionsrichtung R an einem Maschinenrahmen 6 angeordnet sind. Eingangsseitig befindet sich an dem Maschinenrahmen 6 eine Zufuhrrolle, von der eine Folienbahn 8 als Unterfolie abgezogen wird. Ferner weist die Tiefziehverpackungsmaschine 1 eine Transportkette 9 auf, die die Folienbahn 8 ergreift und diese pro Hauptarbeitstakt in der Produktionsrichtung R weitertransportiert.

In der dargestellten Ausführungsform ist die Formstation 2 als eine Tiefziehstation ausgebildet, bei der in die Folienbahn 8 durch Tiefziehen, beispielsweise mittels Druckluft und/oder Vakuum Mulden M geformt werden. Dabei kann die Formstation 2 derart ausgebildet sein, dass in der Richtung senkrecht zur Produktionsrichtung R mehrere Mulden M nebeneinander gebildet werden. In Produktionsrichtung R hinter der Formstation 2 ist eine Einfüllstrecke beziehungsweise Einlegebereich 10 vorgesehen, in der die in die Folienbahn 8 geformten Mulden M mit Produkten befüllt werden. Das Befüllen der Mulden M kann von einem Bediener manuell durchgeführt werden.

Die Siegelstation 3 verfügt über eine hermetisch verschließbare Kammer 3a, in der die Atmosphäre in den Mulden M vor dem Versiegeln mit einer von einer Oberfolienaufnahme 11 abgegebenen Folienbahn 12 zum Beispiel evakuiert und/oder durch Gasspülen mit einem Austauschgas oder mit einem Gasgemisch ersetzt werden kann.

Die Querschneideeinrichtung 4 kann als Stanze ausgebildet sein, die die versiegelten Folienbahnen 8, 12 in einer Richtung quer zur Produktionsrichtung R zwischen benachbarten Mulden M durchtrennt. Dabei arbeitet die Querschneideeinrichtung 4 derart, dass die Folienbahn 8 nicht über die gesamte Breite aufgetrennt wird, sondern zumindest in einem Randbereich nicht durchtrennt wird. Dies ermöglicht einen kontrollierten Weitertransport durch die Transportkette 9.

Die Längsschneideeinrichtung 5 kann als eine Messereinrichtung ausgebildet sein, mit der die versiegelten Folienbahnen 8, 12 zwischen benachbarten Mulden M und am seitlichen Rand der als Unterfolie gebildeten Folienbahn 8 in der Produktionsrichtung R durchtrennt werden, sodass hinter der Längsschneideeinrichtung 5 vereinzelte Verpackungen V vorliegen.

Die Tiefziehverpackungsmaschine 1 verfügt ferner über eine Steuereinrichtung 13. Sie hat die Aufgabe, die in der Tiefziehverpackungsmaschine 1 ablaufenden Prozesse zu steuern und zu überwachen. Eine Anzeigeeinrichtung 14 dient zum Visualisieren beziehungsweise beeinflussen der Prozessabläufe in der Tiefziehverpackungsmaschine 1 für beziehungsweise durch einen Bediener.

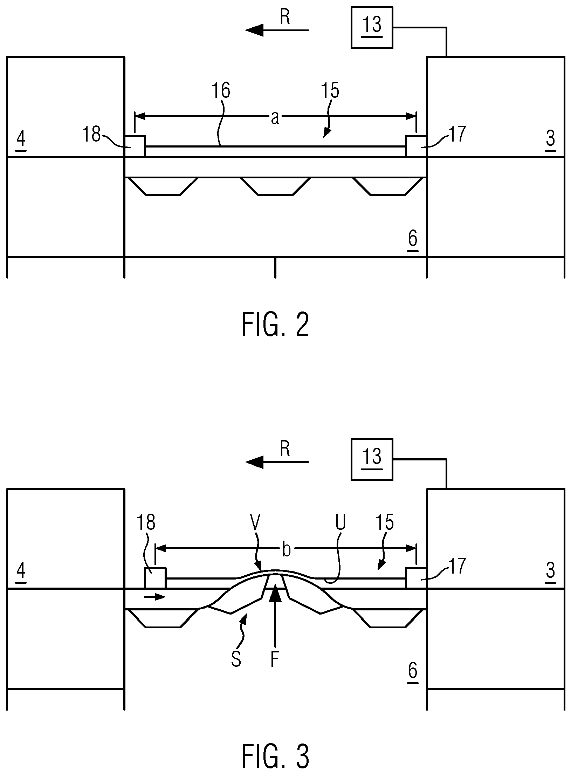

Figur 2 zeigt in schematischer Darstellung einen Bereich der Tiefziehverpackungsmaschine 1, nämlich den Bereich zwischen der Siegelstation 3 und der weiter in Produktionsrichtung R stromabwärts positionierten Querschneideeinrichtung 4. Auf dem Maschinenrahmen 6 ist ein Abdecksystem 15 positioniert. Das Abdecksystem 15 weist eine Schutzabdeckung 16 auf, die als Eingriffsschutz oberhalb der entlang der Produktionsrichtung R transportierten, versiegelten Folienbahnen 8, 12 positioniert ist.

Ferner zeigt Figur 2, dass die Schutzabdeckung 16 in Produktionsrichtung R gegenüberliegende, äußere Ränder 17, 18 aufweist, die durch einen Abstand a voneinander entfernt sind.

Figur 3 zeigt, wie sich die Schutzabdeckung 16 verhält, wenn von unten eine Kraft F, die durch einen Folienbahnstau S verursacht wird, gegen eine Unterseite U der Schutzabdeckung 16 drückt.

Insbesondere zeigt Figur 3, dass sich der Abstand a zwischen den in Längserstreckung der Schutzabdeckung 16 gegenüberliegenden, äußeren Rändern 17, 18 der Schutzabdeckung 16 verringert, wenn die Schutzabdeckung 16 eine durch den Folienbahnstau S veranlasste Verformung V bildet. Dadurch werden die äußeren Ränder 17, 18 aufeinanderzubewegt oder zumindest ein äußerer Rand 17, 18 bewegt sich auf den anderen Rand 17, 18 zu, sodass der in Figur 2 gezeigte Abstand a auf einen exemplarisch in Figur 3 gezeigten Abstand b verringert wird.

Dies bedeutet daher, dass die durch den Folienbahnstau S veranlasste Verformung V der Schutzabdeckung 16 dazu führt, dass sich der Abstand a zwischen den in Längserstreckung der Schutzabdeckung beabstandeten äußeren Rändern 17, 18 der Schutzabdeckung 16 verringert. Mithin liegt zwischen den äußeren Rändern 17, 18 nur noch der verringerte Abstand b vor.

Diese im Hinblick auf die Figuren 2 und 3 durch den Folienbahnstau S veranlasste Abstandsverringerung zwischen den gegenüberliegenden, äußeren Rändern 17, 18 der Schutzabdeckung 16 signalisiert, dass unterhalb der Schutzabdeckung 16 ein Folienbahnstau S entstanden ist. Die Steuereinrichtung 13 kann unter dieser Voraussetzung sofort den Betrieb der Tiefziehverpackungsmaschine 1 stoppen. Eine Abstandsverringerung zwischen den gegenüberliegenden, äußeren Rändern 17, 18 der Schutzabdeckung 16 könnte auch dadurch zustande kommen, dass ein Bediener versucht, die Schutzabdeckung 16 anzuheben. Eine bei einem solchen unerwünschten Eingriff auf die Schutzabdeckung 16 wirkende Kraft F würde nämlich ebenfalls zur Verformung V der Schutzabdeckung 16 führen, d.h. eine Abstandsverringerung zwischen den gegenüberliegenden, äußeren Rändern 17, 18 der Schutzabdeckung 16 bewirken.

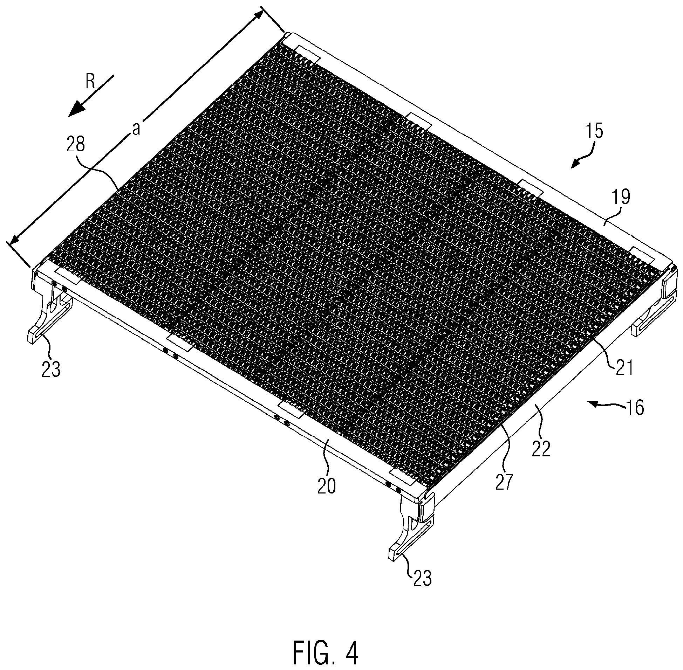

Figur 4 zeigt das Abdecksystem 15 in isolierter Darstellung. Die gegenüberliegenden, äußeren Ränder 17, 18 sind durch Leisten 19, 20 gebildet. Zwischen den beiden Leisten 19, 20 verfügt die Schutzabdeckung 16 über eine Scharnierbandkette 21, die dazu konfiguriert ist, einer von unten gegen sie wirkenden Kraft F, verursacht durch einen Folienbahnstau S, nachzugeben, wodurch sie sich nach oben aufwölbt und dadurch die beiden Leisten 19, 20 aufeinanderzugezogen werden, sprich sich der dazwischenliegende Abstand a verringert.

Die beiden Leisten 19, 20 werden durch die dazwischen angeordnete Scharnierbandkette 21, wenn diese flach ausgelegt ist, auf Abstand a gehalten, welcher sich zum Abstand b verringert, wenn die Scharnierbandkette 21 durch eine von unten durch den Folienbahnstau S veranlasste Kraft F oder durch eine unerwünschte Manipulierung durch einen Bediener zumindest bereichsweise nach oben durchgedrückt wird, sprich die Verformung V gemäß Figur 3 ausbildet. Dadurch verringert sich der Abstand a zwischen den Leisten 19, 20 zum in Figur 3 gezeigten Abstand b.

Weiter zeigt Figur 4, dass die Schutzabdeckung 16 mit äußeren, gegenüberliegenden Rändern 27, 28 auf Führungsschienen 22 abgelegt ist. Die Führungsschienen 22 bilden damit ein Auflager für die quer zur Produktionsrichtung R gegenüberliegenden, äußeren Rändern 27, 28 der Scharnierbandkette 21 aus, damit die Scharnierbandkette 21 nicht durch ihr Eigengewicht nach unten durchhängt. Ferner begünstigen die Führungsschienen 22, dass die Leisten 19, 20 gezielt in oder gegen der Produktionsrichtung R aufeinander zu bewegt werden können, um den Folienbahnstau S und/oder einen unerwünschten Bedienereingriff zu detektieren.

Weiter zeigt Figur 4 Halterungen 23, mittels welchen das Abdecksystem 15 am Maschinenrahmen 6 der Tiefziehverpackungsmaschine 1 befestigbar ist.

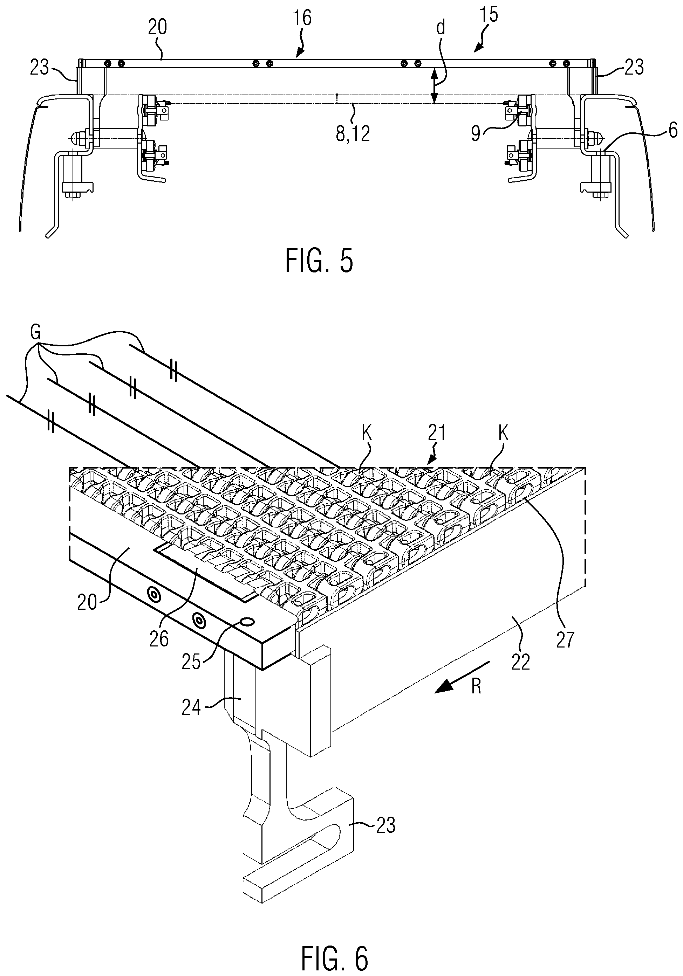

Figur 5 zeigt eine Schnittdarstellung des Abdecksystems 15 im montierten Zustand auf dem Maschinenrahmen 6. Die Schutzabdeckung 16 liegt als flache Abdeckung oberhalb der mittels der Transportketten 9 transportierten Folienbahnen 8, 12 vor. Figur 5 zeigt, dass das Abdecksystem 15 insgesamt einen sehr flachen Aufbau bereitstellt und sich deshalb an der Tiefziehverpackungsmaschine 1 auf engem Bauraum installieren lässt.

Figur 5 zeigt weiter, dass die Scharnierbandkette 21 in einem Abstand d oberhalb der Folienbahn 8, 12 positioniert ist. Der Abstand d kann wenige Zentimeter betragen, z.B. 3cm. Damit kann sich die Scharnierbandkette 21 bereits durch einen geringfügigen Folienbahnstau S durch diesen veranlasst nach oben aufwölben, wodurch die Schutzabdeckung 16 den Folienbahnstau S signalisieren kann.

Figur 6 zeigt, dass die Halterung 23 einen Sensor 24 aufweist. Der Sensor 24 liegt zusammen mit einem in der Leiste 20 integrierten Magneten 25 als Magnetschalter vor. Außerdem zeigt Figur 6, dass die Scharnierbandkette 21 anhand eines an der Leiste 20 festgeschraubten Elements 26 gelenkig an der Leiste 20 befestigt ist.

Quer zur Produktionsrichtung R gegenüberliegende, äußere Ränder 27, 28 der Scharnierbandkette 21 liegen auf den Führungsschienen 22 auf. Dies wird auch in Figur 4 gezeigt. Zwischen den Führungsschienen 22 kann die Scharnierbandkette 21 damit nicht nach unten durchhängen, sondern bildet ein an sich flach ausgebildetes, strukturell gegen Kräfte von oben stabiles Schutzmodul aus, das im Grunde genommen lediglich in Produktionsrichtung R flexibel ist. Dafür verfügt die Scharnierbandkette 21 über eine Vielzahl von quer zur Produktionsrichtung R verlaufenden, parallelen Scharniergelenkachsen G. Die Scharniergelenkachsen G ermöglichen es, dass sich die Scharnierbandkette 21 aufwölbt, wenn gegen ihre Unterseite U eine durch einen Folienbahnstau S veranlasste Kraft F drückt. Dadurch wird der Magnet 25 vom Sensor 24 wegbewegt, wodurch das Ereignis eines Folienbahnstaus S anzeigbar ist.

Die Scharnierbandkette 21 aus Figur 6 verfügt über mehrere, ineinander verzahnte Kunststoffglieder K. Die Kunststoffglieder K sind untereinander gelenkig um die quer zur Produktionsrichtung R verlaufenden Scharniergelenkachsen G verbunden.

Die in Figur 6 gezeigte Leiste 20 liegt frei auf der Halterung 23, sodass sie sich bei einem Folienbahnstau S durch eine Verformung V der Scharnierbandkette 21 entgegen der Produktionsrichtung R auf die andere, in Figur 6 nicht gezeigte Leiste 19 zu bewegt.

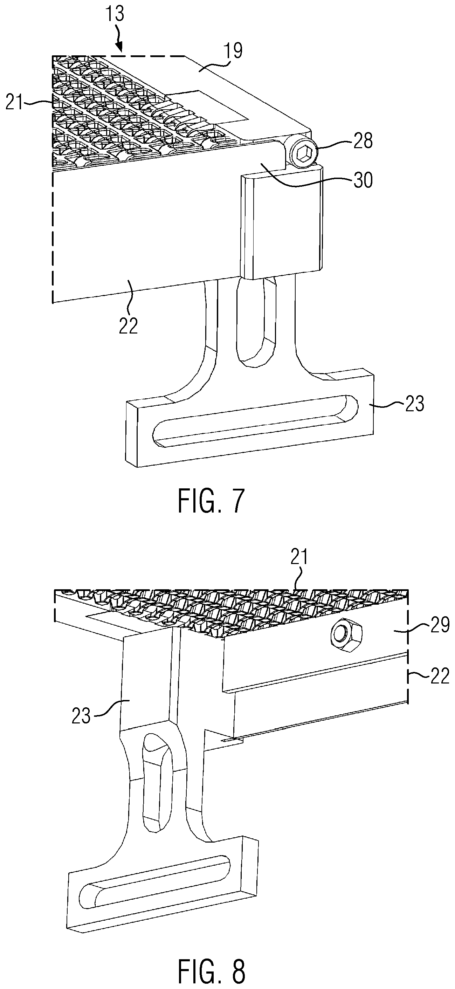

Figur 7 zeigt, dass die Leiste 19 eine Sperre 28 aufweist. Anhand der Sperre 28, die an der Führungsschiene 22 an einer daran ausgebildeten Bordwand 30 fixiert ist, kann verhindert werden, dass sich die Leiste 19 bei einem Folienbahnstau S bewegt, sprich dabei die andere, frei aufliegende Leiste 20 gezwungen ist, sich auf die fixierte Leiste 19 zuzubewegen. Demzufolge reicht zum Erfassen des Folienbahnstaus S die in der Halterung 23 verbaute Sensorik aus, sprich ein einziger Magnetschalter.

Figur 8 zeigt, dass die Führungsschiene 22 innen mit einer Auflage 29 für die Scharnierbandkette 21 ausgebildet ist. Die Bordwand 30 der Führungsschiene 22 kann beliebig nach oben vergrößert werden, um zu verhindern, dass bei einem Folienbahnstau S die Scharnierbandkette 21 aus den Führungsschienen 22 herausfällt.

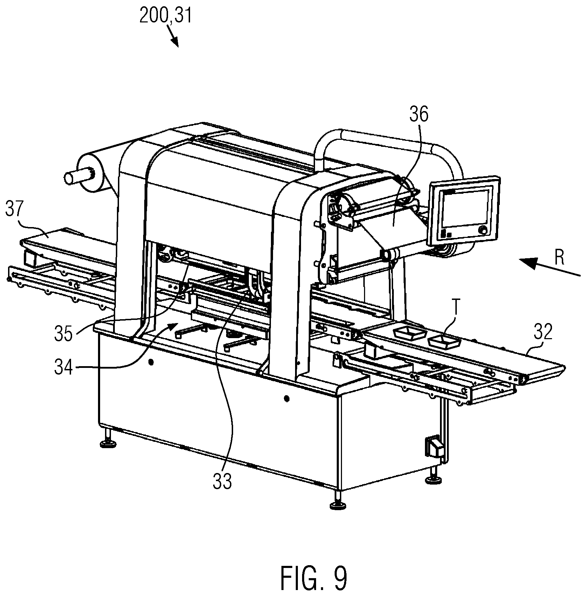

Figur 9 zeigt eine Verpackungsmaschine 200, die in Form einer Schalenverschließmaschine 31 konfiguriert ist. Eine solche Schalenverschließmaschine 31 wird in Fachkreisen auch Traysealer genannt. Die Schalenverschließmaschine 31 umfasst ein Zuführband 32 für Schalenteile T. Mittels einer Greifereinrichtung 33 können die Schalenteile T vom Zuführband 32 abgeholt und einer in Produktionsrichtung R nachgelagerten Siegelstation 34 zugeführt werden, worin die Schalenteile T mit einem Siegelwerkzeug 35 mit einer Oberfolie 36 versiegelt werden. Die versiegelten Schalenteile T werden mittels der Greifereinrichtung 33 abgeholt und an ein Abführband 37 übergeben.

Ein vorangehend in Zusammenhang mit der Tiefziehverpackungsmaschine 1 beschriebenes Abdecksystem 15 kann auch an der Schalenverschließmaschine 31 aus Figur 9 vorteilhaft zum Einsatz kommen. Insbesondere könnte ein solches Abdecksystem 15 derartig konfiguriert sein, dass es einen Transportbereich der Greifereinrichtung 33 gegen Eingriff absichert.

## Patentansprüche

1. Verpackungsmaschine (100, 200), die in Form einer Tiefziehverpackungsmaschine (1) oder einer Schalenverschließmaschine (31) konfiguriert ist, umfassend mindestens ein Abdecksystem (15) zur Anbringung an der Verpackungsmaschine (100, 200), wobei das Abdecksystem (15) mindestens eine Schutzabdeckung (16) umfasst, die als Eingriffsschutz zumindest bereichsweise oberhalb eines entlang der Verpackungsmaschine (100, 200) gebildeten Transportbereichs von Verpackungsmaterial positioniert ist, wobei ein Abstand (a) zwischen in Längserstreckung der Schutzabdeckung (16) gegenüberliegenden, äußeren Rändern (17, 18) der Schutzabdeckung (16) verringerbar ist, **dadurch gekennzeichnet, dass** die Schutzabdeckung (16) mindestens eine Scharnierbandkette (21) mit mehreren in Quererstreckung der Schutzabdeckung (16) verlaufenden, parallelen Scharniergelenkachsen (G) aufweist.

2. Verpackungsmaschine nach Anspruch 1, **dadurch gekennzeichnet, dass** die Scharnierbandkette (21) aus mehreren gelenkig miteinander verbundenen Kunststoffgliedern (K) zusammengebaut ist.

3. Verpackungsmaschine nach einem der vorangehenden Ansprüche, **dadurch gekennzeichnet, dass** an der Schutzabdeckung (16) vorgesehene Leisten (19, 20) die gegenüberliegenden, äußeren Ränder (17, 18) der Schutzabdeckung (16) ausbilden.

4. Verpackungsmaschine nach Anspruch 3, **dadurch gekennzeichnet, dass** das Abdecksystem (15) mindestens eine an der Verpackungsmaschine (100, 200) befestigbare Halterung (23) mit mindestens einem darin integrierten Sensor (24) zum Erfassen der der Halterung (23) zugeordneten Leiste (20) der Schutzabdeckung (16) aufweist.

5. Verpackungsmaschine nach Anspruch 4, **dadurch gekennzeichnet, dass** das Abdecksystem (15) für die andere Leiste (19) eine Sperre (28) zum Sichern deren Position vorsieht.

6. Verpackungsmaschine nach einem der vorangehenden Ansprüche, **dadurch gekennzeichnet, dass** das Abdecksystem (15) seitliche Führungsschienen (22) zum Tragen der Schutzabdeckung (16) aufweist.

7. Verpackungsmaschine nach Anspruch 6, **dadurch gekennzeichnet, dass** die Führungsschienen (22) in Produktionsrichtung (R), an gegenüberliegenden Seiten eines Maschinenrahmens (6) der Verpackungsmaschine (100, 200) lösbar befestigt sind.

8. Verfahren an einer Verpackungsmaschine nach einem der vorangehenden Ansprüche zum Detektieren einer unerwünschten Bedingung entlang eines Transportbereichs von Verpackungsmaterial anhand der oberhalb des Verpackungsmaterials positionierten Schutzabdeckung (16), **dadurch gekennzeichnet, dass** die unerwünschte Bedingung dadurch erfasst wird, dass sich der Abstand (a) zwischen den in Längserstreckung der Schutzabdeckung (16) gegenüberliegenden, äußeren Rändern (17, 18) der Schutzabdeckung (16), in Reaktion auf eine auf die Schutzabdeckung (16) wirkende Kraft (F) verringert.

## Claims

1. Packaging machine (100, 200) configured as a thermoforming packaging machine (1) or a traysealer (31), comprising at least one cover system (15) for attachment to the packaging machine (100, 200),
wherein the cover system (15) comprises at least one protective cover (16) which is positioned at least in some area along the packaging machine above a transport area of packaging material (100, 200) as protection against reaching in the transport area, and wherein a distance (a) between opposite outer edges (17, 18) of the protective cover (16) in the longitudinal direction of the protective cover (16) can be reduced, **characterized in that** the protective cover (16) has at least one hinge band chain (21) with a plurality of parallel hinge joint axes (G) extending in the transverse direction of the protective cover (16).

2. Packaging machine according to claim 1, **characterized in that** the hinge band chain (21) is assembled from a plurality of plastic links (K) connected to each other in an articulated manner.

3. Packaging machine according to one of the preceding claims, **characterized in that** bars (19, 20) provided on the protective cover (16) form the opposite outer edges (17, 18) of the protective cover (16).

4. Packaging machine according to claim 3, **characterized in that** the cover system (15) has at least one holder (23) that can be attached to the packaging machine (100, 200) with at least one sensor (24) integrated therein for detecting the bar (20) of the protective cover (16) associated to the holder (23).

5. Packaging machine according to claim 4, **characterized in that** the cover system (15) provides a lock (28) for the other bar (19) to secure its position.

6. Packaging machine according to one of the preceding claims, **characterized in that** the cover system (15) has lateral guide rails (22) for supporting the protective cover (16).

7. Packaging machine according to claim 6, **characterized in that** the guide rails (22) are detachably attached in the production direction (R) on opposite sides of a machine frame (6) of the packaging machine (100, 200).

8. Method on a packaging machine according to one of the preceding claims for detecting an undesirable condition along a transport area of packaging material by means of the protective cover (16) positioned above the packaging material, **characterized in that** the undesirable condition is detected **in that** the distance (a) between the outer, in the longitudinal direction of the protective cover (16) opposite edges (17, 18) of the protective cover (16) reduces in response to a force (F) acting on the protective cover (16).

## Revendications

1. Machine d'emballage (100, 200) configurée sous la forme d'une machine d'emballage à emboutissage profond (1) ou d'une machine de scellage de barquettes (31), comprenant au moins un système de couverture (15) à mettre en place au niveau de la machine d'emballage (100, 200), dans laquelle le système de couverture (15) comprend au moins un cache de protection (16) qui est positionné, de manière à faire office de protection contre les intrusions, au moins par endroits au-dessus d'une région de transport de matériau d'emballage formée le long de la machine d'emballage (100, 200) , dans laquelle une distance (a) entre des bords extérieurs (17, 18) du cache de protection (16) opposés dans l'extension longitudinale du cache de protection (16) peut être réduite, **caractérisée en ce que** le cache de protection (16) présente au moins une chaîne à plaques articulées (21) avec plusieurs axes d'articulation (G) parallèles s'étendant transversalement par rapport au cache de protection (16).

2. Machine d'emballage selon la revendication 1, **caractérisée en ce que** la chaîne à plaques articulées (21) est assemblée à partir de plusieurs maillons en plastique (K) reliés entre eux de manière articulée.

3. Machine d'emballage selon l'une quelconque des revendications précédentes, **caractérisée en ce que** des baguettes (19, 20) fournies au niveau du cache de protection (16) forment les bords extérieurs (17, 18) opposés du cache de protection (16).

4. Machine d'emballage selon la revendication 3, **caractérisée en ce que** le système de couverture (15) présente au moins un support (23) pouvant être fixé à la machine d'emballage (100, 200) et comprenant au moins un capteur (24) qui est intégré dans ledit support et qui permet de détecter la baguette (20), associée au support (23), du cache de protection (16).

5. Machine d'emballage selon la revendication 4, **caractérisée en ce que** le système de couverture (15) prévoit un blocage (28) permettant de sécuriser la position de l'autre baguette (19).

6. Machine d'emballage selon l'une quelconque des revendications précédentes, **caractérisé en ce que** le système de couverture (15) présente des rails de guidage (22) latéraux permettant de supporter le cache de protection (16).

7. Machine d'emballage selon la revendication 6, **caractérisée en ce que** les rails de guidage (22), dans la direction de production (R), sont fixés de manière amovible sur des côtés opposés d'un châssis de machine (6) de la machine d'emballage (100, 200).

8. Procédé concernant une machine d'emballage selon l'une quelconque des revendications précédentes et permettant de détecter une condition indésirable le long d'une région de transport de matériau d'emballage à l'aide du cache de protection (16) positionné au-dessus du matériau d'emballage, **caractérisé en ce que** la condition indésirable est détectée du fait que la distance (a) entre les bords extérieurs (17, 18) du cache de protection (16) opposés dans l'extension longitudinale du cache de protection (16) se réduit en réaction à une force (F) agissant sur le cache de protection (16).
